# EUROPEAN PATENT APPLICATION

(11) **EP 4 480 829 A1**
(43) Date of publication of application: **25.12.2024**
(21) Application number: 23180887.4
(22) Date of filing: 22.06.2023
(51) Int. Cl.: B64G 1/00, B64G 1/40, B64G 1/58, B64G 1/64

(54) **TANKER MODULE FOR AN UPPER STAGE OF A LAUNCH VEHICLE**

(71) Applicant: ArianeGroup GmbH, 82024 Taufkirchen (DE)
(72) Inventor: Gosch, Marco, 28199 Bremen (DE); Gaulke, Diana, 28199 Bremen (DE); Cambrésy, Patricia, 28199 Bremen (DE); Rakers, Sven, 28199 Bremen (DE)
(74) Representative: Marschall, Stefan

(57) **Abstract**

The invention relates to a tanker module (1) for an upper stage (2) a launch vehicle for transporting at least one fluid such as a cryogenic fluid propellant (4) and/or an oxidizer (6) into orbit (41), the tanker module (1) comprising a first tank (3) for the cryogenic fluid propellant (4), a second tank (5) for the oxidizer (6), a fairing (7) delimiting an interior space (8), and at least one fuel coupling (8), a fairing (7) defining an interior space (8), and at least one fuel coupling (9, 10) for refueling the first tank (3) and/or the second tank (5), wherein the first tank (3) and/or the second tank (5) are arranged in the interior space (8) within the fairing (7).

## Description

The present invention relates to the transport of liquids, for instance a cryogenic fluid propellant and/or an oxidizer, into orbit.

Several methods and devices for transporting the propellant and/or oxidizer into orbit are known from the prior art.

In a first process, the propellant and/or oxidizer is stored in special tanks and transported to orbit in a cargo or payload compartment of a conventional launch vehicle (launcher).

A disadvantage of this method is that the cargo or payload compartment of a conventional launch vehicle has a comparably small volume compared to the outer dimensions of the upper stage, so that only a small volume of the propellant and/or oxidizer can be transported into orbit.

In another method, a modified upper stage is manufactured with a larger first tank for the propellant and/or a larger second tank for the oxidizer, wherein the propellant and oxidizer from the tanks are used to power the rocket engine of the upper stage to launch the modified upper stage into orbit. The remainder of the propellant in the first tank and/or the remainder of the oxidizer in the second tank can then be used to refuel a spacecraft in orbit.

The object of the present invention is therefore to provide a means of transporting liquids such as a propellant and/or oxidizer into orbit, whereby the greatest possible amount of the propellant and/or oxidizer can be transported into orbit.

This object is solved by a tanker module with the features of claim 1.

The invention relates to a tanker module for an upper stage of a launch vehicle for transporting at least one liquid such as a cryogenic fluid propellant and/or an oxidizer into orbit, the tanker module comprising an integrated first tank for a first fluid such as the cryogenic fluid propellant, an integrated second tank for a second fluid such as the oxidizer, a fairing (including its isolation) delimiting an interior space, and at least one fuel coupling for filling or refueling the first tank and/or the second tank, the first tank and/or the second tank being integrally arranged in the interior space defined by the fairing.

An advantage of this tanker module is that the tanker module has integrated tanks specifically for transporting liquids such as fuel, oxidizer, ethanol, and/or kerosene. The tanks are optimized to the inner wall / inner diameter of the fairing thus enabling a maximum loading capacity. For instance, the first tank and the second tank may be arranged within the tanker module such that at least 70% of an inner volume of the fairing of the tanker module is occupied by the first tank and/or the second tank. In this way, the inner volume is used as efficiently as possible.

Another advantage is that the tanker module can be connected to a conventional upper stage of a launch vehicle, eliminating the need to design and manufacture a modified upper stage specifically for the tank of cryogenic transport.

The first fluid can be a propellant such as liquid hydrogen (LH2) or liquid methane (LCH4). The oxidizer can be liquid oxygen (LOX). Additionally, the storage and transport of large quantities of other liquids to space is possible (Water, Liquid Air, liquid propellants).

The fairing may have an aerodynamic shape to minimize drag during flight through the atmosphere to orbit and possibly during re-entry into the atmosphere. The tanker module may be used in orbit to be able to fuel at least one spacecraft.

The tanker module may additionally include a pressurization unit, lines for filling the tanks, a heat shield, an avionics unit for Guidance, navigation, and control (GNC), a device for docking with an orbiting spacecraft, and/or a device for transferring the liquid from the two tanks to an orbiting (receiving) spacecraft.

The pressurization unit can be, for example, a pump that generates the pressure in the lines for filling the tanks.

The avionics unit for GNC can be used to control the upper stage and/or the tanker module to specifically enable docking maneuvers with the receiving spacecraft.

The docking device is suitable to fix the spacecraft relative to the tanker module as long as the refueling process is in progress. After the refueling process, the docking device is released again.

The first tank and the second tank are suitable to transport the fluids, such as LH2, and oxidizer, such as LOx, under pressure and at low temperatures.

Advantageously, the tanker module may have an adapter connector for a conventional upper stage, which may include a third tank for a third fluid such as a cryogenic propellant, a fourth tank for fourth fluid such as an oxidizer, a fairing, and a rocket engine. The tanker module may be mechanically and electrically connectable and disconnectable to the upper stage by means of the adapter connector. The upper stage may include at least a second fuel coupling to fill the third tank and/or the fourth tank with the propellant or oxidizer. The propellant from the third tank and the oxidizer from the fourth tank may be sized and are usable to power the upper stage rocket engine and transport the propellant in the first tank and the oxidizer in the second tank into orbit.

The adapter connector is suitable for electrically and mechanically connecting the tanker module to the electrical upper stage, whereby the connection can be released again. This enables easy mounting of the preferably prefabricated tanker module on the upper stage.

The first tank, the second tank, the third tank and the fourth tank can each have their own fuel coupling, which can be routed through the fairing to the outside so that separate simultaneous refueling on the launch pad of the individual tanks is possible. Multiple fuel couplings may also be combined into a common fuel coupling.

Advantageously, at least 50% of the outer surface of the first tank for the fuel may be connected to an inner surface of the fairing of the tanker module. As a result, the largest possible area of the outer surface of the first tank is connected to the inner surface of the fairing, so that the highest possible proportion of the inner volume of the fairing is filled by the two tanks.

Advantageously, an outer diameter of the first tank and/or the second tank may correspond to an inner diameter of the fairing. This simplifies the installation of the tanks inside the fairing.

Advantageously, the fairing may be provided with a heat shield on the outer surface to reduce heat transfer into the tanks during induced by atmospheric drag during the launchers ascend phase.

Advantageously, the volume of the first tank for the fuel can be between five and seven times larger than the volume of the second tank for the oxidizer. A preferred mixing ratio between the propellant LH2, and the oxidizer LOX is approximately 6:1. The ratio of the volume of the first tank compared to the volume of the second tank can be chosen accordingly, so that when the rocket engine is burning, both components are completely burned.

Another object of the invention is a method of using the tanker module described above, wherein the tanker module is mounted on the upper stage of a launch vehicle and is positioned at a launch pad, wherein on the launch pad, prior to launch, the first tank is filled with a first fluid such as a propellant and the second tank is filled with a second fluid such as an oxidizer.

This object is solved by a method with the features of claim 7.

One advantage of this method is that the two tanks of the tanker module are refueled immediately before takeoff on the launch pad.

Advantageously, the launch vehicle can be ignited and the upper stage can be transported with the tanker module to a fuel depot in orbit. This provides an efficient way to transport the tanker module into orbit to the fuel depot using a conventional upper stage while maximizing the amount of fuel to orbit.

Advantageously, the tanker module with the upper stage can be docked to the on-orbit fuel depot by means of a docking device, whereby the first tank and/or the second tank are filled into the respective tanks of the on-orbit fuel depot.

The on-orbit fuel depot may have two tanks for two different fluids, sch as a propellant and an oxidizer. After docking the tanker module to the fuel depot by means of the corresponding docking device, the propellant and the oxidizer are consequently filled from the two tanks of the tanker module to the two tanks of the fuel depot.

Advantageously, the tanker module connected to the upper stage can dock to the fuel depot in orbit by means of a docking device, so that at least one spacecraft can be refueled at the fuel depot directly from the first tank and/or the second tank of the tanker module until the tanks are emptied. In this alternative, the first fluid and the second fluid are not filled, but merely docked to the fuel depot. At a later time, a spacecraft can then be refueled directly using the tanks of the tanker module.

Advantageously, multiple tanker modules can dock with the fuel depot so that the on-orbit fuel depot provides a larger volume of the fluids for refueling the spacecraft.

The fuel depot can, for example, be a central tanker station with several docking devices. In this way, for example, a maximum of six tanker modules arranged perpendicular to each other can dock at the corresponding six docking devices. This increases the capacity for refueling the spacecraft at the fuel depot.

Advantageously, the tanker module or upper stage can be connected in orbit to the fuel depot and/or to at least one other tanker module, thus forming a tanker station comprising a plurality of tanker modules.

The tanker module may have a docking device for a spacecraft so that a separate on-orbit fuel depot is not required and that spacecraft can dock directly with the tanker module and be refueled. Multiple tanker modules can also be interconnected to increase the capacity to refuel spacecraft in orbit.

Advantageously, the emptied tanker module and/or upper stage may be positioned in a graveyard orbit, burned by directed atmospheric re-entry, or the depleted tanker module and/or upper stage may re-enter the atmosphere and land in a controlled manner However, the tanker module connected to the upper stage can also be decelerated powered by the upper stage's rocket engine as it enters the atmosphere and land on a landing platform, for instance.

Another object of the invention is a manufacturing method of the above-described tanker module, wherein the tanker module with the integrated components is pre-assembled in such a way that the tanker module is ready for connection to the upper stage of a launch vehicle.

This object is solved by a manufacturing method with the features of claim 13.

The integrated components may include, for example, the first tank, the second tank, the aerodynamic fairing, the fuel coupling, the pressurization unit, lines for filling the tanks, the heat shield, the avionics unit for GNC, the device for docking with an orbiting spacecraft, the adapter connector, and/or the device for transferring fuel from the two tanks to an orbiting spacecraft.

One advantage of this manufacturing process is that the tanker module is assembled in a production hall, for example, and is only connected to the upper stage on the launch pad before takeoff.

Another object of the invention is a launch vehicle with an upper stage and the tanker module described above and/or for application of the method described above and/or manufactured according to the manufacturing method described above.

This object is solved by a launch vehicle (launcher) with the features of claim 14.

The tanker module can be used, for example, for a two-stage launch vehicle with an upper stage and a lower stage, or even a three-stage launch vehicle with an additional middle stage.

Advantageous embodiments are disclosed in the dependent claims, the description and the figures.

In what follows, preferred embodiments of the present invention are explained with respect to the accompanying drawings. As is to be understood, the various elements and components are depicted as examples only, may be facultative and/or combined in a manner different than that depicted. Reference signs for related elements are used comprehensively and not necessarily defined again for each figure. Shown is schematically in
- Fig.1a: a schematic representation of the tanker module with a conventional upper stage;
- Fig.1b: a section of Fig.1a;
- Fig.2an: an alternative design of the tanker module;
- Fig.3a: schematic representation illustrating the process for using the tanker module.

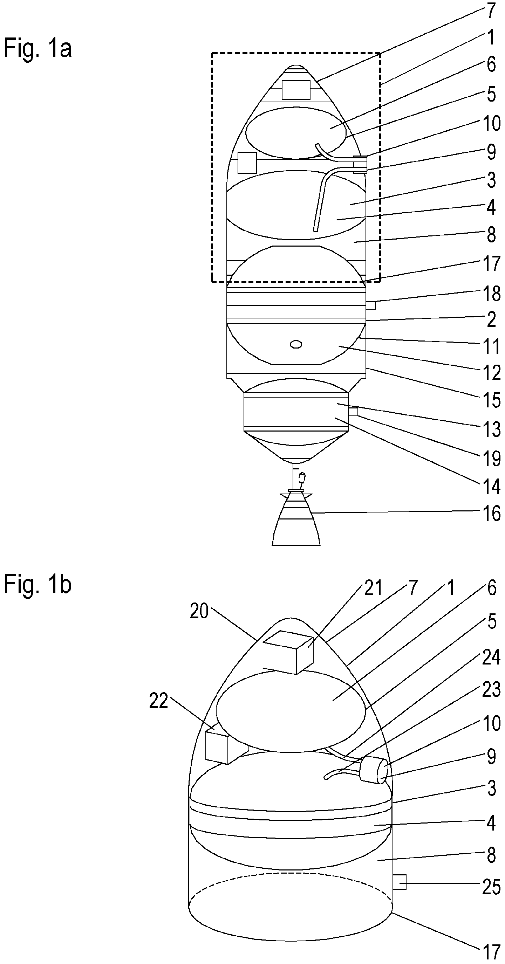

Fig.1a shows a schematic representation of a tanker module 1 for a conventional upper stage 2 of a launch vehicle comprising a first tank 3 for a first fluid, such as a cryogenic fluid propellant 4, for instance - but not limited to - LH2, a second tank 5 for second fluid such as an oxidizer 6, for instance - but not limited to - LOx, a fairing 7 delimiting an interior space 8, a first fuel coupling 9 for the first tank 3 and a second fuel coupling 10 for the second tank 5. The first tank 3 and the second tank 5 are thereby arranged as integrated tanker module parts in the interior space 8 of the fairing 7.

The conventional upper stage 2 comprises a third tank 11 for a cryogenic fluid propellant 12, such as LH2, a fourth tank 13 for an oxidizer 14, such as LOx, a fairing 15, and a rocket engine 16. The tanker module 1 comprises an adapter connector 17, wherein the tanker module 1 is electrically and mechanically detachably connected to the upper stage 2 by means of the adapter connector 17. The upper stage 2 further comprises a third fuel coupling 18 for the third tank 11 and a fourth fuel coupling 19 for the fourth tank 13, for refueling the tanks 11 and 13 with fuel 12 and oxidizer 14, respectively. The tanker module 1 with the connected upper stage 2 may be mounted on a lower stage, not shown, on a launch pad prior to launch.

Fig.1b shows an enlarged section of Fig. 1a with the tanker module 1, wherein the fairing 7 is provided with a heat shield (thermal insulation) 20, which dissipates heat during flight through the atmosphere. The tanker module 1 further comprises an avionics unit for GNC 21, a pressurization unit 22, a first line 23 for filling the first tank 3, a second line 24 for filling the second tank 5, and a docking device 25 for docking with an orbiting spacecraft.

An outer diameter of the first tank 3 corresponds to the inner diameter of the fairing 7, whereby the first tank 3 is mechanically connected to the inside of the fairing 7.

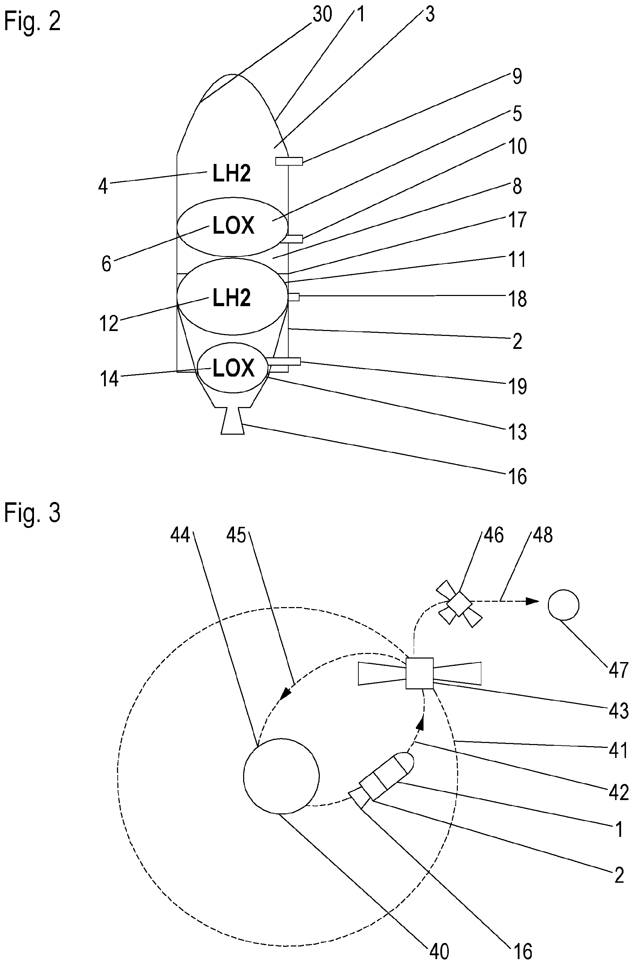

Fig. 2 shows a schematic representation of a further embodiment of the tanker module 1 connected to the conventional upper stage 2, wherein the tanker module 1 has an integrated first tank 3 for a propellant and an integrated second tank 5 for an oxidizer 6. An area of at least 50%, preferably 70%, of an outer surface 30 of the first tank 3 is thereby connected to an inner surface of the fairing 7 of the tanker module 1. The second tank 5 is arranged according to the illustration below the first tank 3 and connected to the first tank 1. As a result, the largest possible proportion of the interior space 8 is occupied by the first tank 3 and the second tank 5, so that a high quantity of the propellant 4 and the oxidizer 6 can be transported into orbit.

Compared to Fig. 1a, the first fuel coupling 9 for the first tank 3 is designed separately from the second fuel coupling 10 for the second tank 5, so that the length of the fuel lines is shorter than in Fig. 1a.

The outer diameter of the first tank 3 including its outer isolation and the second tank 5 correspond to an extension of the interior space 8 (inner diameter of the fairing or an inner isolation), so that the inner space 8 is occupied by the tanks 3, 5 as efficiently as possible. In one embodiment, the inner isolation of the fairing 7 is the outer isolation of the first tank 3 so that at least the first tank 3 and the fairing 7 have a common isolation. Such common isolation is also applicable to the second tank 5. The volume of the first tank 3 can be approximately six times larger than the volume of the second tank 5 to provide the optimum mixing ratio of 6:1.

Fig. 3 shows a schematic illustration explaining the method of using the tanker module 1 connected to a conventional upper stage 2 of a launch vehicle. A lower stage of the launch vehicle, not shown, carrying the upper stage 2. The upper stage 2 carries the tanker module 1 at its top. The launch vehicle lifts of from a starting pad at Earth 40 and transports the tanker module 1 into orbit 41, as illustrated by the dashed line 42. In orbit 41, the tanker module 1 and/or upper stage 2 is docked with a fuel depot 43 so that at least one receiving spacecraft (transfer vehicle) 46 can be refueled at the fuel depot 43. The transported propellant 4 and oxidizer 6 in the first tank 3 and the second tank 5 can either be filled into the corresponding tanks of the fuel depot 43 to refuel the launch vehicle 46 from these tanks, or the launch vehicle 46 can dock directly at the tanker module 1 by means of the docking device 25 of Fig. 1b and be refueled directly until the tanks are emptied. The tanker module 1 with the emptied tanks 3 and 5 can be positioned in a graveyard orbit, burned by a directed re-entry into the atmosphere, or re-enter the atmosphere in a controlled manner by means of the engine 16 of the upper stage 2 and land on a landing platform 44 on the Earth's surface, as indicated by the dashed line 45.

The refueled launch vehicle 46 may, for example, fly to the moon 47 as indicated by the dashed line 48.

It is noted that the tanker module 1 and the fuel depot 43 are not limited to cryogenic fluid propellant and/ or an oxidizer. Fluids per se can be transported into orbit, stored in the fuel depot 43 and/or transferred to a spacecraft. An exemplar fluid are ethanol and kerosene. Even potable water could be brought into orbit by the invention.

The invention relates to a tanker module (1) for an upper stage (2) of a launch vehicle for transporting at least one fluid such as a cryogenic fluid propellant (4) and/or an oxidizer (6) into orbit (41), the tanker module (1) comprising a first tank (3) for the cryogenic fluid propellant (4), a second tank (5) for the oxidizer (6), a fairing (7) delimiting an interior space (8), and at least one fuel coupling (8), a fairing (7) defining an interior space (8), and at least one fuel coupling (9, 10) for refueling the first tank (3) and/or the second tank (5), wherein the first tank (3) and/or the second tank (5) are arranged in the interior space (8) within the fairing (7).

### List of reference signs

- 1: Tanker module
- 2: Conventional upper stage
- 3: first tank
- 4: Cryogenic fluid propellant
- 5: second tank
- 6: oxidizer
- 7: fairing
- 8: interior space
- 9: first fuel coupling
- 10: second fuel coupling
- 11: third tank
- 12: cryogenic fluid propellant
- 13: fourth tank
- 14: oxidizer
- 15: fairing
- 16: rocket engine
- 17: adapter connector
- 18: third fuel coupling
- 19: fourth fuel coupling
- 20: Heat shield
- 21: Avionics unit for GNC
- 22: pressurization unit
- 23: first line
- 24: second line
- 25: docking device
- 30: exterior surface
- 40: Earth
- 41: Orbit
- 42: dotted line
- 43: Fuel depot
- 44: Landing platform
- 45: dotted line
- 46: receiving spacecraft (transfer vehicle)
- 47: Moon
- 48: dotted line

## Claims

1. Tanker module (1) for an upper stage (2) of a launch vehicle for transporting at least one fluid such as a cryogenic fluid propellant (4) and/or an oxidizer (6) into orbit (41), the tanker module (1) comprising a fairing (7) defining an interior space (8), a first tank (3) for a first fluid such as the cryogenic fluid propellant (4) integrated in the interior space (8), a second tank (5) for a second fluid such as the oxidizer (6) integrated in the interior space (8), and at least one fuel coupling (9, 10) for filling or refueling the first tank (3) and/or the second tank (5).

2. Tanker module (1) according to claim 1, wherein the tanker module (1) has an adapter connector (17) adapted to connect mechanically and electrically the tank module (1) to an upper stage (2) for transporting the tank module (1) into orbit, wherein the upper stage (2) has a rocket engine unit (16) and tanks (11, 12; 13, 14) for powering the rocket engine (16).

3. Tanker module (1) according to claim 1 or 2, wherein at least 50% of the outer surface (30) of the first tank (3) for the fuel (4) is connected to an inner surface of the fairing (7) of the tanker module (1).

4. Tanker module (1) according to any one of claims 1-3, wherein an outer diameter of the first tank and/or the second tank corresponds to an inner diameter of the fairing (7).

5. Tanker module (1) according to any one of claims 1-4, wherein the fairing (7) is provided with a heat shield (20) on the outer surface to enable re-entry into the atmosphere and a controlled landing (45) of the tanker module (1) connected to the upper stage (2) after use in orbit (41).

6. Tanker module (1) according to any one of claims 1-5, wherein the volume of the first tank (3) for the fuel (4) is between five and seven times larger than the volume of the second tank (5) for the oxidizer (6).

7. Method of using the tanker module (1) according to any one of claims 1-6, wherein the tanker module (1) is mounted on the upper stage (2) of a launch vehicle and positioned at a launch pad, wherein on the launch pad prior to launch the first tank (3) is filled with the first fluid (4) and the second tank (5) is filled with the second fluid (6).

8. Method according to claim 7, wherein the tanker module (1) with the upper stage (2) is docked to the fuel depot (43) in orbit (41) by means of a docking device (25), wherein the fluid (4) of the first tank (3) and/or the fluid (6) of the second tank (5) are filled into the respective tanks of the fuel depot (43) in orbit (41).

9. Method according to claim 7, wherein the tanker module (1) with the upper stage (2) docks to the fuel depot (43) in orbit (41) by means of a docking device (25), so that at least one spacecraft (46) can be refueled at the fuel depot (43) directly from the first tank (3) and/or the second tank (5) of the tanker module (1) until the tanks (3, 5) are emptied.

10. The method according to any of the preceding claims 7, 8 or 9, wherein the fuel depot (43) can have a plurality of tanker modules (1) docked thereto such that the fuel depot (43) provides a larger volume of first fluid (4) and the second fluid (6) in orbit (41) for refueling the spacecraft (46).

11. Method according to any of the preceding claims 7 to 9, wherein the tanker module (1) or upper stage (2) in orbit (41) is connected to the fuel depot (43) and/or to at least one further tanker module (1), thus forming a tanker station comprising a plurality of tanker modules (1).

12. The method according to any of claims 7 to 11, wherein the emptied tanker module (1) and/or upper stage (2) is positioned in a graveyard orbit, burns by directed reentry into the atmosphere, or the emptied tanker module (1) and/or upper stage (2) re-enters the atmosphere.

13. Method of manufacturing the tanker module (1) according to any one of claims 1-6, wherein the tanker module (1) is pre-assembled with the integrated components such that the tanker module (1) is ready for connecting to the upper stage (2) of a launch vehicle.

14. Launch vehicle comprising an upper stage (2) and a tanker module (1) according to any one of claims 1-6 and/or for application of the method according to any one of claims 7-12 and/or manufactured according to a manufacturing method according to claim 13.
